# EUROPEAN PATENT SPECIFICATION

(11) **EP 4 143 459 B1**
(45) Date of publication and mention of the grant of the patent: **16.09.2026**
(21) Application number: 21729656.5
(22) Date of filing: 28.04.2021
(51) Int. Cl.: F16H 57/02, F16H 61/24, F16F 15/26, F02B 61/02, F16H 63/32, F16H 63/18, F16H 63/14, F16H 59/02, F16H 57/023

(54) **AN INTERNAL COMBUSTION ENGINE AND GEARBOX FOR A MOTOR VEHICLE**
VERBRENNUNGSMOTOR UND GETRIEBE FÜR EIN KRAFTFAHRZEUG
MOTEUR À COMBUSTION INTERNE POUR UN VÉHICULE À MOTEUR

(30) Priority: 29.04.2020 IN 202041018336
(43) Date of publication of application: 08.03.2023
(73) Proprietor: TVS Motor Company Limited, 600006 Chennai (IN)
(72) Inventor: SUBRAMANIAN, Krishna Kumar, Chennai, 600 006 (IN); KANDREGULA, Srinivasa Rao, Chennai, 600 006 (IN)
(74) Representative: Patentanwaltskanzlei Matschnig & Forsthuber OG
(86) International application number: PCT/IN2021/050416
(87) International publication number: WO 2021/220303

(56) References cited:
- EP-A1- 0 402 837
- EP-A1- 0 408 335
- EP-B1- 0 402 837
- US-A- 5 065 644
- US-A1- 2017 227 124
- US-B2- 7 096 753

## Description

### TECHNICAL FIELD

The present subject matter relates to a motor vehicle and more particularly but not exclusively to an engine assembly for the motor vehicle.

### BACKGROUND

Generally, a motor vehicle is powered by an internal combustion (IC) engine to act as a power unit for the motor vehicle. The IC engine converts chemical energy into mechanical energy by combustion of air-fuel mixture within a combustion chamber of the IC engine. Combustion of the air-fuel mixture causes a piston to reciprocate in the combustion chamber. The reciprocating to-and-fro motion is translated into a rotatory motion of a crankshaft. The rotational motion of the crankshaft is used for moving the motor vehicle.

Typically, in order to cater to various power and torque requirements, a gear system with plurality of gear ratios is provided with the IC engine. A selected gear is configured to provide a pre-determined gear ratio. The user can manually shift gear through a gear shaft or depending on user requirements an electronic control unit can perform gear shifting with minimal or no user intervention. Typically, to start the IC engine, it is cranked either manually using a kick-start lever, by a hand-operated lever or through an electric start system that utilizes an electric motor. In the motor vehicle, various systems including the gear system and starting system are packaged within the IC engine.

### BRIEF DESCRIPTION OF DRAWINGS

The detailed description is described with reference to the accompanying figures, which is related to a two-wheeled motor vehicle being one embodiment of the present invention. However, the preset invention is not limited to the depicted embodiment(s). In the figures, the same or similar numbers are used throughout to reference features and components.
Fig. 1 illustrates a left-side view of an exemplary motor vehicle, in accordance with an embodiment of the present subject matter.
Fig. 2 depicts a right-side view of an exemplary internal combustion engine, in accordance with an embodiment of the present subject matter.
Fig. 3 (a) depicts a right-side perspective view of an exemplary internal combustion engine, in accordance with an embodiment of the present subject matter.
Fig. 3 (b) illustrates a schematic perspective view of a portion of an IC engine with partially exploded components, in accordance with an embodiment of the present subject matter.
Fig. 3 (c) illustrates a schematic enlarged view of a portion of an IC engine, in accordance with an embodiment of the present subject matter as depicted in Fig. 3 (b).
Fig. 3 (d) depicts another enlarged view of a portion of the IC engine, in accordance with an embodiment of the present subject matter.

### DETAILED DESCRIPTION

Generally, the motor vehicles, especially smaller capacity motor vehicles including two-wheeled or three-wheeled type, are provided with a kick-start system or a similar cranking system. Further, in order to set the vehicle into motion, the power from the crankshaft of the internal combustion engine is carried to a wheel of the vehicle, in a controllable way, through a transmission system. The transmission system for the IC engine of a two-wheeled motor vehicle such as a motorcycle generally comprises of a clutch assembly, and a gear system containing gear train. A drive mechanism connects the gear system to at least one wheel. The gear train has multiple gear ratios and depending on speed and torque requirement, a gear ratio is selected.

Conventionally, incorporation of the various systems like the gear system, starter system etc. on the IC engine makes the IC engine bulkier. For example, various components including clutch assembly, gear system including gear sets, shifting mechanism, lubrication assembly etc. are to be accommodated on the crankcase and with minimal or no interference. Additionally, the conventional gear shifting mechanism is spread out on the crankcase owing to avoidance of interference or for packaging challenges thereby occupying lot of space. For example, the IC engine comprises various parts like a drum stopper that are secured to the crankcase. Such parts are to be disposed away from the rotating parts to avoid any interference. Moreover, some conventional gear shifting mechanism operate at a short angle of rotation thereby requiring high precision manufacturing and assembly. Any variations would affect angle of rotation thereby resulting in over shifting or under shifting offering poor performance feel to user. Also, weight of the overall IC engine increases, as the size of the IC engine is increased to accommodate the aforementioned and other systems. Moreover, the IC engine, especially the crankcase has to made rigid to securely support the various systems. An effect of increase in weight is that a frame assembly supporting the IC engine is also to be made bulkier to securely support the IC engine. Moreover, lot of space is occupied on the motor vehicle by the IC engine. Fuel economy of the motor vehicle is affected due to higher weight. Bulkier configuration of the IC engine may affect the ground clearance of the motor vehicle. For example, in a motorcycle with a fuel tank disposed above the IC engine, the position of the fuel tank cannot be moved beyond a certain height owing to riding posture, visibility, and other design constraints. This may result in the IC engine extending downward affecting the ground clearance rendering the vehicle impractical to ride in city and off-road conditions. It could also damage the components of the IC engine due to pot holes or bumps on roads.

Typically, attempts have been made in the past to make the IC engine compact. Such attempts, includes but are not limited to a kick-start system being eliminated in the motor vehicles to reduce components and to save space. However, the removal of kick-start system is compensated by a large capacity battery, which eventually adds to the weight of the motor vehicle. Moreover, there would be various conditions during which a battery might not be sufficient to crank the IC engine. For example, with time battery losses its charge retaining capability and may fail to start the IC engine or battery maybe drained due to nonusage of motor vehicle for prolonged duration. This would require the user to push the vehicle to a service center for getting the battery charged or replaced making it a cumbersome, inconvenient and costlier process. Some of the other known solutions include reducing size of fuel tank in order to compensate an increase in size of the IC engine. However, by reducing the size of the fuel tank, a fuel holding capacity of the motor vehicle is reduced which may invoke undesirable range anxiety in the user. In certain other known solutions, a diameter of the wheel is increased to address problem related to ground clearance. Increasing a diameter of the wheel may alter the seat height, vehicle riding dynamics and any other design parameters of the motor vehicle, which is undesirable.
In document EP 0 408 335 B1, a balancer system for suppressing vibrations in an internal combustion engine for a motorcycle has pair of balancer shafts, and a pair of first and second primary counterbalances supported on the balancer shafts, respectively, for rotation about axes parallel to the crankshaft of the engine in ganged relation to the crankshaft at the same speed as and in the opposite direction to the crankshaft is disclosed. The balancer shafts extend parallel to the crankshaft and are positioned one on each side of the crankshaft. The first and second primary counterbalances are rotatable about respective centers which are connected by a line passing through a substantially central portion of the crankshaft, the first and second primary counterbalances being rotatably supported on the balancer shafts near ends thereof, with the centers being spaced from the central portion of the crankshaft by substantially equal distances. However, this design also results in increasing the size of the IC engine.

Thus, there existing a challenge to provide an improved & compact design of an IC engine that accommodates various systems without increasing the size of the IC engine. Further, the present subject is aimed at addressing the aforementioned and other problems in the known art.

An internal combustion (IC) engine for a motor vehicle is provided. The IC engine of the present subject matter can be forwardly inclined or a vertical type or horizontal type. In one embodiment, a crankshaft is rotatably supported by a crankcase. In one implementation, the crankcase is formed by two crankcase members. A clutch shaft is supported by the crankcase. The clutch shaft is configured to support at least one clutch. The at least one clutch is configured to selectively engage and disengage the clutch shaft with the crankshaft. The clutch shaft is disposed adjacent to the crankshaft.

In one embodiment, a shift drum assembly is supported by the crankcase. The shift drum assembly is disposed downward to the clutch shaft. The shift drum assembly capable of interacting with the clutch shaft is disposed below the clutch shaft. In one embodiment, a drum stopper, which is configured to engage with the shift drum assembly is disposed substantially rearward to the shift drum assembly. The shift drum assembly and the drum stopper are disposed compactly below the clutch shaft and away from the crankshaft. In proximity to the crankshaft an oil-filter assembly, an oil- pump assembly are already disposed.

In one embodiment, a gearshift shaft is disposed forwardly downward to the shift drum assembly. The gearshift shaft is disposed rearward and downward to the crankshaft. The gearshift mechanism that includes a shift drum assembly, the drum stopper and the gearshift shaft are compactly packaged in the layout of the IC engine.

In one embodiment, the drum stopper, which is to be pivoted is disposed rearward to the shift drum assembly and the gearshift shaft that operates the shift drum assembly is disposed ahead/ forward to the shift drum assembly. Thus, the there is no interference between the drum stopper and components like the gearshift pawl that get connected to the gearshift shaft.

In one embodiment, a kick-start shaft is provided which gets connected to a kick-start lever. The user can crank the IC engine using the kick-start lever. In one embodiment, the drum stopper is substantially disposed between the kick-start shaft and the shift drum assembly. Thus, the kick-start shaft is disposed rearward to the drum stopper.

In one embodiment, the crankcase assembly comprises a substantially equilateral quadrilateral profile as seen from a projected lateral side view thereof or of the internal combustion engine. Thus, the compact equilateral quadrilateral profile of the crankcase assembly can be compactly packaged in a compact motor vehicle with the need for any change in a frame assembly or change in position of a fuel tank.

In one embodiment, the internal combustion engine comprises an integrated member. The integrated member is disposed substantially between a first vertical plane passing through an axis of the drum stopper and a second vertical plane passing through an axis of the kick-start shaft. In one embodiment, the integrated member is a rib member that provides structural strength near the drum stopper mounting portion and the kick-start shaft mounting portion.

In one embodiment, the IC engine comprises a drum stopper provided with an elastic member. The elastic member is provided to pre-load the drum stopper to act on the shift drum assembly. One end of the elastic member is pre-loaded against the integrated member. Further, the kick-start shaft is provided with a kick-shaft stopper configured to abut the integrated member at a pre-determined angle of rotation of the kick-start shaft. Thus, the same integrated member acts as a support for the elastic member and as a stopper from the kick-shaft stopper. This eliminates need for multiple stoppers/ supports.

In one embodiment, the integrated member is integrally formed on the crankcase. Need for using separate fasteners or securing means for the integrated member is eliminated. In one embodiment, the integrated member comprises of a base with a cross-sectional area larger than a cross-sectional area of rest of the integrated member. In one embodiment, the base of the integrated member abuts a peripheral wall of the crankcase. The integrated member may have any known geometrical shape including a triangular shape/profile when viewed from a lateral side.

In one embodiment, an imaginary triangular region (different from aforementioned triangular profile) with vertices is formed at axes of the kick-start shaft, the clutch shaft, and the gearshift shaft. At least one of the drum stopper and the shift drum assembly is disposed substantially within the triangular region when viewed from lateral side of the IC engine. Thus, the kick-start shaft, the clutch shaft, the gearshift shaft, the drum stopper and the shit drum assembly are compactly packaged in the IC engine in order to be packaged within a smaller region as above defined triangular region.

In one embodiment, the shift drum assembly comprises a star-index member disposed at a lateral end thereof. The star-index member is configured to engage with a gearshift pawl connected to a gearshift shaft, which is disposed forwardly downward of the shift drum assembly. In one embodiment, a long axis of the gearshift pawl is rearwardly inclined. The rearwardly inclined gearshift pawl is disposed away from oil- sump below the crankshaft, which is critical for lubrication. Therefore, a need for creating additional volume of oil- sump is avoided.

In one embodiment, the crankcase comprises a peripheral wall. The peripheral wall is disposed substantially orthogonal to an outer lateral surface of the crankcase. The peripheral wall extends along entire periphery of the crankcase (or crankcase member). The peripheral wall comprises a lower wall portion comprising a first portion and a second portion. The second portion is rearward to the first portion and is disposed at an acute angle with respect to the first portion. The gearshift shaft is disposed in proximity to a transition portion between the first portion and the second portion. In one embodiment, a curved profile of the transition portion is effectively used for packaging the gearshift shaft and the corresponding gearshift pawl.

The IC engine configuration may be implemented in any two-wheeled vehicle or a three-wheeled motor vehicle. However, for the purpose of explanation and by no limitation, the IC engine, corresponding additional advantages and features are described through the following embodiments. Arrows wherever provided on top right corner of the figure represent direction with respect to motor vehicle. Arrow F represents forward direction, arrow R represents rearward direction, arrow UW represents upward direction and arrow DW represents downward direction.

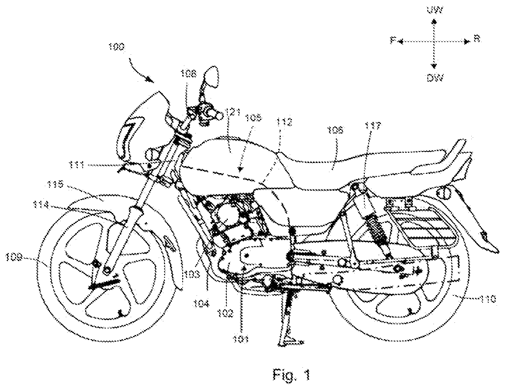

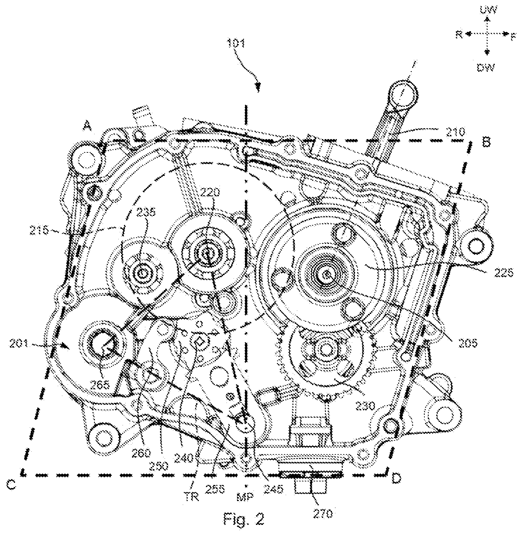

Fig. 1 illustrates a left-side view of an exemplary motor vehicle 100, in accordance with an embodiment of the present subject matter. The motor vehicle 100 comprises of a frame assembly 105 acting as a structural member of the motor vehicle 100. The frame assembly 105 comprises a head pipe 111, a main tube 112 (schematically shown with dotted line) extending rearwardly downward from the head pipe 111. The motor vehicle comprises a front wheel 109, a rear wheel 110, a fuel tank 121 and seat 106. In one embodiment, the frame assembly 105 includes a main tube 112, a down tube (not shown), and one or more seat rails (not shown) extending rearward from the main tube 112. The head pipe 111 supports a steering shaft (not shown) and a front suspension 114 (only one visible) that is attached to the steering shaft through a lower bracket (not shown). The front suspension 114 supports the front wheel 109. The upper portion of the front wheel 109 is covered by a front fender 115 mounted to the front suspension 114. A handlebar assembly 108 is fixed to upper bracket (not shown) and can rotate in both directions for maneuvering the motor vehicle 100. A head light (not marked), a visor guard (not marked) and instrument cluster (not shown) is arranged on an upper portion of the head pipe 111. The down tube may be located in front of the IC engine 101 and extends slantingly downward from head pipe 111. The IC engine comprises a crankcase assembly 201 (shown in Fig. 2) that supports various components of the IC engine 101. The IC engine 101 comprises at least one side cover 102 on lateral sides to cover components thereat. The main tube 112 is located above the IC engine 101 and extends rearward from head pipe 111. The front of the IC engine 101 is mounted at the front by the down tube and the rear of the IC engine 101 at the rear portion is connected to the main tube 112. In one embodiment, the IC engine 101 is a forwardly inclined type.

In one embodiment, the fuel tank 121 is mounted on a horizontal portion of the main tube 112. Seat rails are joined to main tube 112 and extend rearward to support the seat 106. A swing arm (not shown) is connected to the frame assembly 105 to swing vertically, and a rear wheel 110 is connected to rear end of the rear swing arm. Generally, the rear swing arm is supported by a mono rear suspension or two suspensions 117 (as illustrated in the present embodiment) disposed on either side of the motor vehicle 100. A tail light unit (not shown) is disposed at the end of the motor vehicle at the rear of the seat 106. The rear wheel 110 is arranged substantially below the seat 106 and rotates by a driving force of the IC engine 101 transmitted through a chain drive (not shown) from the IC engine 101. In another embodiment, a belt drive, a continuously variable transmission or an automatic transmission may be used. Further, an electric motor may be provided to assist the IC engine 101 or to independently drive the motor vehicle 100 in conjunction with an IC engine. An exhaust system 104 is connected to the IC engine 101 for expelling exhaust gases generated due to combustion of air-fuel mixture. In one embodiment, at least a portion of the exhaust system 104 extends towards one lateral side of the motor vehicle 100 and is disposed adjacent to the rear wheel 110 (a portion of the exhaust system 104 disposed adjacent to the rear wheel 110 and is schematically shown in dotted line).

Fig. 2 depicts a right-side view of the IC engine without a side cover 102, in accordance with an embodiment of the present subject matter. The IC engine 101 comprises a cylinder head assembly 103 having a cylinder head (not shown) and a cylinder head cover (not shown) mounted atop the cylinder head. In an embodiment, the internal combustion engine 101 is a single cylinder engine. More particularly, in one embodiment, the internal combustion engine 101 is a fourstroke internal combustion engine 101. In other alternative embodiment, the internal combustion engine 101 can include more than one cylinder head, say a plurality of cylinders. In an embodiment, the cylinder head of the present subject matter includes one or more ports (not shown in this figure). For example, an exhaust port (not seen in this figure) of the internal combustion engine 101 enables exiting/expelling out the exhaust gases arising out of the combustion of the air-fuel mixture that occurs inside the combustion chamber (not shown) of the internal combustion engine 101. The gases exiting from the exhaust port are transported through the exhaust pipe system which is connected to the cylinder head through a flange member (not shown).

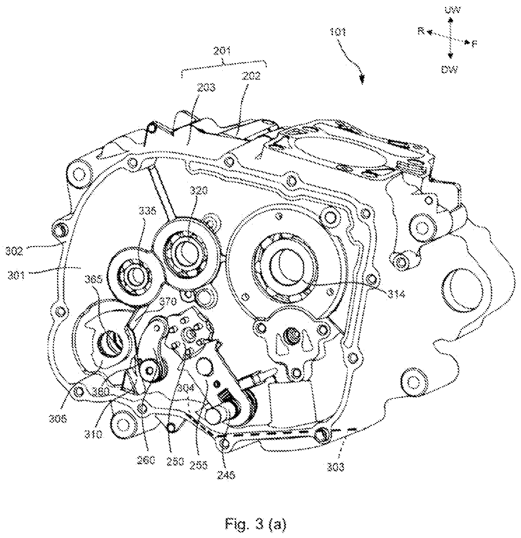

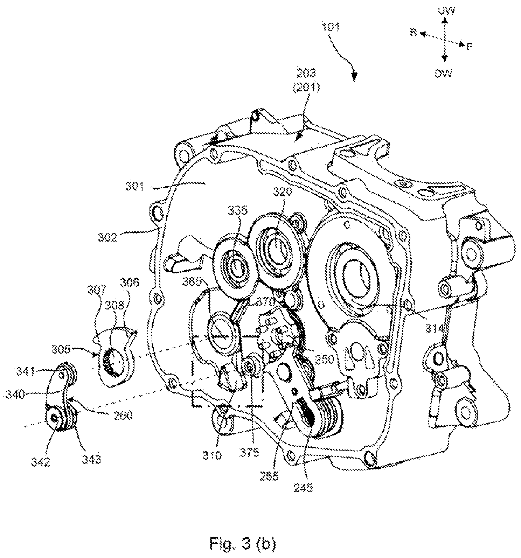

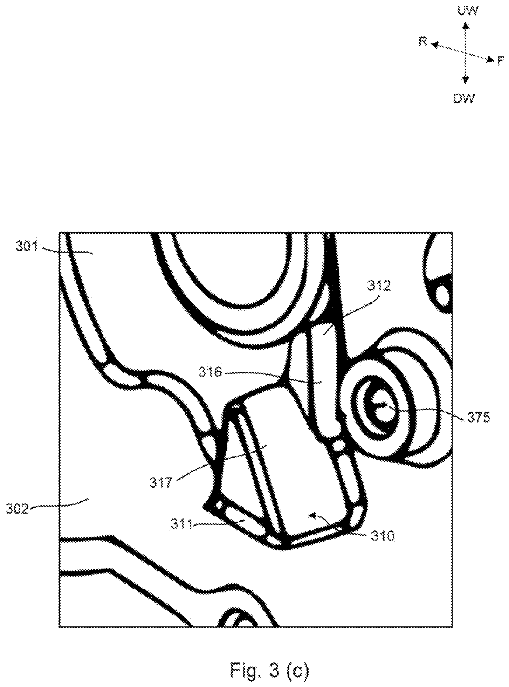

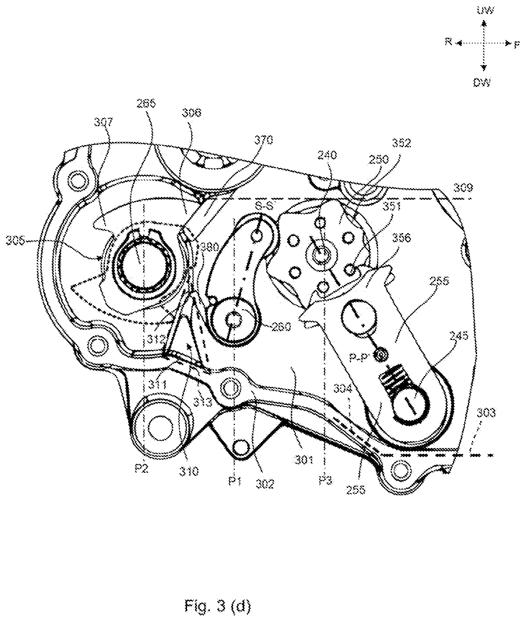

In one embodiment, the cylinder block is supported by a crankcase assembly 201. In one embodiment, the crankcase assembly 201 is formed by two or more crankcase-members. In the depicted embodiment, the crankcase assembly 201 is formed by a left-crankcase member 202 and a right-crankcase member 203 (also shown in Fig. 3). The crankcase assembly 201 is provided with plurality of apertures. Through the plurality of apertures, the crankcase assembly 201 rotatably supports plurality of components of the IC engine including a crankshaft 205. The crankshaft 205 is in turn connected to a piston (not shown) that is capable of moving to-and-fro inside a combustion chamber (not shown) defined by the cylinder head and the cylinder block. In one embodiment, the reciprocating motion of the piston is converted into a rotational motion of the crankshaft 205 through a connecting rod 210. In the depicted embodiment, a filter assembly 225 is mounted to the crankshaft 205 and is disposed towards one lateral side thereof. An oil- pump assembly 230 is mounted Further, the IC engine 101 comprises a clutch assembly 215 (schematically shown in dotted line) disposed on lateral side of the crankcase assembly 201 and supported by a clutch shaft 220.

In one embodiment, a drive shaft 235 is disposed substantially adjacent to the clutch shaft 220. In the depicted embodiment, a shift drum assembly 240 is disposed substantially below the clutch shaft 220. A gearshift shaft 245 is rotatably supported by the crankcase assembly 201 and the gearshift shaft 245 is configured to rotate the shift drum assembly 240 by a pre-determined angle. In one implementation, the gearshift shaft 245 is a spindle. Plurality of shift forks (not shown) engage with the shift drum assembly 240 and the plurality shift forks are configured to perform engagement of a pre-determined gear ratio attained by the rotation of the shift drum assembly 240. In one embodiment, the shift drum assembly 240 comprises a star-index member 250 that is provided at lateral end of the shift drum assembly 240. A gearshift pawl 255 is secured to one lateral end of the gearshift shaft 245 (as illustrated in the Fig. 2). Other end (not shown) of the gearshift shaft 245 is functionally connected to a gearshift lever (not shown). User of the motor vehicle can perform gearshift operation by actuation of the gearshift lever. Actuation of the gearshift lever causes angular rotation of the gearshift shaft 245. Rotation of the gearshift shaft 245 causes rotation of the gearshift pawl 255. The gearshift pawl 255 is configured to perform rotation of the shift drum assembly 240 through the star-index member 250.

Further, a drum stopper 260 is provided to keep the shift drum assembly 240 in a selected orientation corresponding to a selected gear ratio so that it does not shift from a pre-determined orientation. The drum stopper 260 is elastically pre-loaded in order to exert a force to keep the shift drum assembly 240 in a desired position. In one embodiment, the drum stopper 260 is compactly packaged adjacently rearward to the shift drum assembly 240 (and the star-index member 250), when viewed from lateral side. Further, the gearshift shaft 245 is disposed forwardly downward of the shift drum assembly 240. Thus, the gearshift pawl 255 is disposed at an angle towards the shift drum assembly 240. In the depicted embodiment, the gearshift pawl 255 is disposed at a rearward inclination.

In one implementation, a kick-start shaft 265 is rotatably supported on the crankcase assembly 201. The kick-start shaft 265 is functionally connected to a kick-start lever (not shown) to perform cranking of the IC engine 101. The kick-start shaft 265 is disposed at a substantially rearward and a downward portion of the crankcase assembly 201. The kick-start shaft 265 is configured to rotate the crankshaft 205 through plurality of intermediary gears that are rotatably supported on one or more shafts of the IC engine 101. In one embodiment, the IC engine 101 may be provided with only an electric starter, like a starter motor. Thus, the features of the present subject are still applicable excluding the kick-starter shaft.

In one embodiment, the kick-start shaft 265, the clutch shaft 220, the shift drum assembly 240, the drum stopper 260 and the gearshift shaft 245 are compactly packaged within the layout of the IC engine 101. In one embodiment, the gearshift shaft 245 is disposed substantially at a mid-portion of the crankcase assembly (201), in a longitudinal direction F-R. The gearshift shaft 245 comprises an axis extending substantially in a lateral direction RH-LH. In one embodiment, considering an imaginary vertical plane, referred to as a mid-plane MP, the crankshaft 205, components mounted to crankshaft and oil pump assembly 230 are substantially disposed on one side to the mid-plane MP, when viewed from lateral side RH/ LH. In one embodiment, the mid-plane MP passes through the gearshift shaft 245. The clutch shaft 220, the drive shaft 235, the kick-start shaft 265, the shift drum assembly 240, the drum stopper 260, and a major portion of the clutch assembly 215 and the gearshift pawl 255 are disposed rearward to the mid-plane MP. Thus, heavy components like crankshaft 205 that supports the connecting rod 210 and the piston are disposed in a substantially first half portion with reference to the mid-plane MP. As the first half portion of the crankcase assembly 201 has to support the cylinder block, cylinder head assembly and major portion of the oil in oil sump. In one embodiment, the first portion The improved crankcase assembly 201 of the IC engine 101 as per the present subject matter, optimally supports the various systems and components without any undesirable reinforcement at any region of the crankcase assembly 201 thereby maintaining a balanced distribution of mass as well as a compact layout of the IC engine. The compact layout achieved by the present configuration as per an embodiment, enables obtaining a substantially equilateral quadrilateral ABCD of the crankcase assembly 201 design as seen from a direction parallel to an axis of the crankshaft axis205 or as seen form a projected view/ projected lateral direction of the IC engine 101. In one embodiment, the mid-plane MP is configured to provide a mass distribution on either side of the mid-plane MP to be within a range of 45 to 55 % of a total mass of the internal combustion engine 101. This provides substantially equal distribution of mass about the first half portion and the second half portion of the IC engine 101.

Further, an imaginary triangular region TR with vertices formed at axes of the kick-start shaft 265, the clutch shaft 220, and the gearshift shaft 245 are considered. The drum stopper 260 and the shift drum assembly 240 are disposed substantially within the triangular region TR when viewed from a lateral side RH or LH of the IC engine 101.

Fig. 3 (a) depict a perspective view of a crankcase, in accordance with an embodiment of the present subject matter. Fig. 3 (b) depicts a perspective view of a crankcase with partially exploded components, in accordance with an embodiment of the present subject matter. The crankcase assembly 201 comprises an outer lateral surface 301, which is typically non-uniform with undulation. A peripheral wall 302 is disposed in order to form a boundary for the crankcase assembly 201 (especially the right crankcase member 203). In one embodiment, the peripheral wall 302 is elevated from the outer lateral surface 301 of the crankcase assembly 201. In one embodiment, a side cover 102 is supported on the peripheral wall 302. Plurality of apertures are provided selectively along the peripheral wall 302 for securing the side cover 102 to the crankcase assembly 201 through fasteners.

In one embodiment, the crankcase assembly 201 comprises the peripheral wall 302. The peripheral wall 302 is substantially orthogonal to the outer lateral surface 301 of the crankcase assembly 201. The peripheral wall 302 comprises a lower wall portion comprising a first portion 303 and a second portion 304. In one embodiment, the first portion 303 is a substantially horizontal portion. The second portion 304 is disposed at an acute angle with respect to the first portion 303. The gearshift shaft 245 is disposed in proximity to a transition portion between the first portion 303 and the second portion 304. The second portion 304 is substantially upward. The first portion 303 supports an oil- drain plug 270 (shown in Fig. 2), which may include an additional oil- filtering member. The shift drum assembly 240 and the drum stopper 260 are disposed away from the crankshaft 205, the oil- filter assembly 225 and the oil- pump assembly 230.

**In** the depicted embodiment, a crankshaft bearing 314 that is corresponding to the crankshaft 205 (shown in Fig. 2) is depicted. Similarly, a clutch shaft bearing 320 and a drive shaft bearing 335 corresponding to the clutch shaft 220 and drive shaft 235 (shown in Fig. 2) are shown in the current illustration. Further, the crankcase assembly 201 is provided with a kick shaft aperture 365 corresponding to the kick-start shaft 265 (shown in Fig. 2). One end of the kick-start shaft 265 is provided with a kick-shaft stopper 305, which rotates along with the kick-start shaft 265. In a non-operational condition of the kick-start shaft 265, the kick-shaft stopper 305 abuts against a first rib 370, which acts a stopper. During operation of the kick-start shaft 265 due to kicking operation of a kick-start lever by user, the kick-shaft stopper 305 rotates. In the depicted embodiment, the kick-shaft stopper 305 rotates in an anti-clock wise direction as viewed from the right lateral side RH of the crankcase assembly 201.

In one embodiment, the kick-shaft stopper 305 comprises an aperture 308 that enables securing of the kick-shaft stopper 305 to the kick-start shaft 265. The kick-shaft stopper 305 comprises a first engaging portion 306 and a second engaging portion 307. The first engaging portion 306 abuts the first rib 370 in order to restrict rotation of the kick-start shaft 265 in a clock-wise direction, when released by the user. The crankcase assembly 201 is provided with an integrated member 310. The second engaging portion 307 in an operational direction (anti-clockwise direction) engages with an integrated member 310 to restrict rotation of the kick-start shaft 265 beyond a certain pre-determined angle.

The shift drum assembly 240 is disposed substantially downward to the clutch shaft 220. In one implementation, the drum stopper 260 is disposed rearward to the shift drum assembly 240. The drum stopper 260 comprises an arm portion 340, a roller 341, a pivot portion 342, and a groove portion 343. The roller 341 is rotatably disposed at one end of the arm portion 340. The pivot portion 342 is disposed at other end of the arm portion 340. The groove portion 343 is disposed in proximity to the pivot portion 342 and is configured to accommodate an elastic member 380 like a torsion spring in order pre-load the drum stopper 260. The crankcase assembly 201 is provided with a cylindrical protrusion 375 for pivotably mounting the drum stopper 260 through the pivot portion 342.

In one embodiment, the drum stopper 260 is compactly disposed between the shift drum assembly 240 (analogous element star-index member 250 shown) and the kick-start shaft 265. In one embodiment, the integrated member 310 is disposed adjacent to the drum stopper 260. The elastic member 380, in one implementation, is a torsion spring accommodated on the groove portion 343. One end of the elastic member 380 engages with the arm portion 340 and other end of the elastic member 380 is configured to abut the integrated member 310. In one embodiment, the integrated member 310 is formed in the shape of a triangle, when viewed from a lateral side RH or LH of the IC engine 101.

Fig. 3 (c) illustrates a schematic enlarged view of a portion of an IC engine, in accordance with an embodiment of the present subject matter as depicted in Fig. 3 (b). The integrated member 310 in one embodiment, comprises a stopper portion 316 and a reinforcing portion 317. The stopper portion 316, according to one implementation, is provided on the outer lateral surface of the crankcase assembly 201. The reinforcing portion 317 is provided on the stopper portion 316. In one embodiment, both the stopper portion 316 and the reinforcing portion 317 are integrally formed. The integrated member 310 formed by the stopper portion 316 and the reinforcing portion 317 abuts the peripheral wall 302 of the crankcase assembly 201.

In one embodiment, the integrated member 310 comprises a triangular profile 313 (shown in Fig. 3 (d)). The integrated member 310 comprises a base 311 (shown in Fig. 3 (d)) that abuts the peripheral wall 302 and a vertex 312 (shown in Fig. 3 (d)) extends inward (in upward direction in the depicted embodiment) from the peripheral wall 302. As illustrated, in one implementation, the stopper portion 316 is configured to have a larger cross-sectional area when compared to a cross-sectional area of the reinforcing portion 317, when viewed from the lateral side RH/ LH of the IC engine 101. The integrated member 310 with two different cross-sectional areas is optimally configured to provide structural integrity with minimal usage of material. In one embodiment, the stopper portion 316 with the larger cross-sectional area stops the kick-shaft stopper 305 and to support the elastic member 380 (shown in Fig. 3 (a)). The reinforcing portion 317 integrated with the stopper portion 316 provides reinforcement to the stopper portion 316 to withstand the load acting on it from the kick-shaft stopper 305 and the elastic member 380. In one implementation, the elastic member 380, specifically one end of the elastic member (say, one end of a torsion spring) is supported at the vertex 312 or one side of the stopper portion 316. The kick-shaft stopper 305 is stopped on the other side of the stopper portion 316. In one embodiment, the triangular profile 313, with the base 311 towards the peripheral wall 302 and the narrowing profile towards the vertex 312 into the crankcase assembly 201, occupies optimally minimal space in the crankcase assembly 201. This optimal structure with minimal space requirement enables compact layout configuration of the drum stopper 260 between a shift drum assembly 240 disposed in a downward portion of the crankcase assembly 201 and the kick-start shaft 265.

Fig. 3 (d) depicts another enlarged view of a portion of an IC engine, in accordance with an embodiment of the present subject matter. The kick-start shaft 265, the kick-shaft stopper 305, and the drum stopper 260 are compactly accommodated within a small layout space at a rearward and downward portion of the crankcase assembly 201. As shown in Fig. 2, the crankshaft 205, the clutch shaft 220, and the drive shaft 235 are disposed substantially upward with respect to the shift drum assembly 240. The drum stopper 260 is disposed substantially away from the region occupied by the clutch 221 (shown in Fig. 2), which is one of the largest components disposed on the outward lateral side of the crankcase assembly 201. As the drum stopper 260 is disposed at a rearward and downward portion on the crankcase assembly 201, when viewed from the lateral side RH/ LH, the other components like the gearshift pawl 255, the oil- pump assembly 230 (shown in Fig. 2) are compactly packaged in the IC engine 101. Furthermore, the drum stopper 260 engaging with the star-index member 250 restricts over-shifting and assists in gear shifting through a plurality of valley portions 352 provided on the star-index member 250. Further, due to shorter distance between the gearshift shaft 245 and the shift drum assembly 240, the user experiences a distinct gear shifting feel or feedback due to larger angle of rotation which is necessary for perceivable feedback of gear shifting. During gear shifting, the gearshift pawl 255 is rotated due to rotation of the gearshift shaft 245. The rotation of the gearshift shaft 245 can be in either clockwise or anti-clockwise direction. Correspondingly, the gearshift pawl 255 rotates the star-index member 250 through plurality of pins 351 provided on the start index 250. In one embodiment, a pair of pins of the plurality of pins 351 enable rotation of the star-index member 250. Rotation of the star-index member 250 rotates the shift drum assembly 240 causing movement of the forks thereby causing gear shifting. The roller 341 of the drum stopper 260 sits at the valley portion when change gear operation is not being performed. When gearshift operation is performed, rotation of the star-index member causes the roller 341 to slide from the valley portion 352 to a peak portion formed between two valley portions 352. Subsequent to the peak portion the roller 341 assists rotation of the star-index member 250 while rolling towards the valley portion 352. Upon reaching the valley portion 352, the star-index member 250 is held in the pre-determined position till next gearshift operation. In one implementation, the gearshift shaft 245 is rotated by an angle in range of 14-18 degrees thereby causing about 72 degrees angular rotation of the shift drum assembly 240. The user experiences a better or distinct gearshift feedback feel when compared to a rotation of the gearshift shaft in single digit angles.

The drum stopper 260 has the pivot portion 342 (shown in Fig. 3 (b)) which is disposed in proximity to the integrated member 310 and the elastic member 380 like a torsion spring; The torsion spring is disposed about the drum stopper 260 and is configured to engage with the integrated member 310 on one side thereof. In one embodiment, the integrated member 310 is compactly disposed substantially between a first vertical plane P1 passing through an axis (axis of rotation) of the drum stopper 260 and parallel to the crankshaft axis and a second vertical plane P2 passing through an axis of the kick-start shaft 265 and parallel to the crankshaft axis. In one implementation, a first distance between the first vertical plane P1 and the second vertical plane P2 is smaller than a length of the drum stopper 260. Further, a third vertical plane P3 is passing through said shift drum assembly 240 and parallel to the crankshaft axis and a second distance between the first vertical plane P1 and the third vertical plane P3 is smaller than a length of the drum stopper 260. Thus, the smaller distance between the planes P1 & P2, P1 & P3 signifies the compact packaging of the components in the IC engine 101.

The drum stopper has a long axis S-S' that is substantially vertical parallel to plane P1 or P2 or P3 thereby occupying less space. Further, perpendicularity is maintained between drum stopper 260 and the star-index member 250, when considering an axis of the roller 341 (shown in Fig. 3 (b)) and an axis of the star-index member 250 for effective operation as prescribed. Further, the kick-shaft stopper 305 in an actuated condition of the kick-start lever, has the second engaging portion 307 engaging on other side of the integrated member 310. The kick-shaft stopper 305 in actuated condition is illustrated in dotted line and in a non-actuated condition is illustrated in solid line.

Further, in one embodiment, the drum stopper 260 and the gearshift pawl 255 are disposed in a substantially in a second half portion of the crankcase assembly 201 and substantially on one side of an imaginary line 309 passing through an upper most portion of the star-index member 250 & orthogonal to planes P1 or P2 or P3. In one implementation, the second half portion is a rear half portion. In one embodiment, the gearshift pawl 255 is connected to a gearshift shaft 245, and a long axis P-P' of the gearshift pawl 255 is rearwardly inclined. Thus, the gearshift pawl 255 is disposed rearward to eliminate any interference with the oil- pump assembly 230, the oil- filter assembly 225 and the oil- drain plug 270.

Further, as illustrated in Fig. 3 (a) and Fig. 3 (d), in one implementation, the integrated stopper 360 is having a triangular profile 313 when viewed from the lateral side RH/ LH. The integrated stopper 360 protrudes outward from the outer lateral surface 301 of the crankcase assembly 201. A triangular profile 313 is schematically shown in dotted line. A base 311 of the integrated member 310 is abutting the peripheral wall 302 and a vertex 312 opposite to the base 311 is disposed between the drum stopper 260 and the kick-shaft stopper 305. In one embodiment, the base 311 comprises a larger cross-sectional area compared to rest of the integrated member 310. In one embodiment, the integrated member 310 is integrally formed with the crankcase assembly 201 (say right-crankcase member 203). The larger base provides the structural strength required to withstand force acting thereon from the elastic member 380 and the kick-shaft stopper.

While certain features of the claimed subject matter have been illustrated and described herein, many modifications substitutions, and changes may still be possible without departing from the invention such as it is defined in the appended claims.

### List of reference signs:

- 100: vehicle
- 101: internal combustion engine
- 102: side cover
- 103: cylinder head assembly
- 104: exhaust system
- 105: frame assembly
- 106: seat
- 108: handlebar assembly
- 109: front wheel
- 110: rear wheel
- 111: head pipe
- 112: main tube
- 114: front suspension
- 115: front fender
- 117: rear suspension
- 121: fuel tank
- 201: crankcase
- 202: left-crankcase member
- 203: right-crankcase member
- 205: crankshaft
- 210: connecting rod
- 215: clutch assembly
- 220: clutch shaft
- 225: oil-filter assembly
- 230: oil pump assembly
- 235: drive shaft
- 240: shift drum assembly
- 245: gearshift shaft
- 250: star-index member
- 255: gearshift pawl
- 260: drum stopper
- 265: kick-start shaft
- 270: oil-drain plug
- 301: outer lateral surface
- 302: peripheral wall
- 303: first portion
- 304: second portion
- 305: kick-shaft stopper
- 306: first engaging portion
- 307: second engaging portion
- 308: aperture
- 309: imaginary line
- 310: integrated member
- 311: base
- 312: vertex

## Claims

1. A motorbike (100) having an internal combustion engine (101) and gearbox assembly (101), said internal combustion engine (101) and gearbox assembly (101) comprising:
a crankshaft (205), said crankshaft (205) being supported by a crankcase assembly (201) in a transversal direction of the motorbike (100);
a clutch shaft (220), supporting at least one clutch (221), said at least one clutch (221) being configured to engage and disengage said clutch shaft (220) with said crankshaft (205);
**characterized in that** the gearbox assembly (101) further comprises:
a shift drum assembly (240), disposed substantially downward of said clutch shaft (220);
a drum stopper (260), being configured to engage with said shift drum assembly (240) and being disposed substantially rearward to said shift drum assembly (240) when viewed from a lateral side (RH, LH) of said internal combustion engine (101) and the motorbike (100); and
a gearshift shaft (245), being disposed forward to said shift drum assembly (240) when viewed from a lateral side (RH, LH) of said internal combustion engine (101) and the motorbike (100).

2. The internal combustion engine (101) for the motor vehicle (100) as claimed in claim 1, wherein said internal combustion engine (101) comprises a kick-start shaft (265), said drum stopper (260) being substantially disposed between said kick-start shaft (265) and said shift drum assembly (240).

3. The internal combustion engine (101) for the motor vehicle (100) as claimed in claim 1, wherein said crankcase assembly (201) comprises an integrated member (310), said integrated member (310) being disposed substantially between a first vertical plane (P1) passing through an axis of said drum stopper (260) and a second vertical plane (P2) passing through an axis of a kick-start shaft (265).

4. The internal combustion engine (101) for the motor vehicle (100) as claimed in claim 3, wherein said first vertical plane (P1) and said second vertical plane (P2) being disposed with a first distance substantially smaller than a length of said drum stopper (260), and wherein a third vertical plane (P3), passing through an axis of said shift drum assembly (240), is disposed at a second distance from said first vertical plane (P1), said second distance being substantially smaller than said length of said drum stopper (260).

5. The internal combustion engine (101) for the motor vehicle (100) as claimed in claim 3, wherein said drum stopper (260) being provided with an elastic member (380) pre-loaded against said integrated member (310) and said kick-start shaft (265) being provided with a kick-shaft stopper (305) configured to abut said integrated member (310) at a pre-determined angle of rotation of said kick-start shaft (265).

6. The internal combustion engine (101) for the motor vehicle (100) as claimed in claim 3, wherein said integrated member (310) being integrally formed with said crankcase assembly (201) and said integrated member (310) comprises a base (311) with a larger cross-sectional area abutting a peripheral wall (302) of said crankcase assembly (201), and wherein said integrated member (310) comprises a geometrical shape including a triangular profile when viewed from a lateral side (RH, LH) of said crankcase assembly (201).

7. The internal combustion engine (101) for the motor vehicle (100) as claimed in claim 2, wherein said internal combustion engine (101) comprises a triangular region (TR) with vertices formed at axes of said kick-start shaft (265), said clutch shaft (220), and said gearshift shaft (245), wherein at least one of said drum stopper (260) and said shift drum assembly (240) being disposed substantially within said triangular region (TR) when viewed from side of said internal combustion engine (101).

8. The internal combustion engine (101) for the motor vehicle (100) as claimed in claim 1, wherein said crankcase assembly (201) comprises a substantially equilateral quadrilateral profile as seen from a projected lateral side view of said internal combustion engine (101).

9. The internal combustion engine (101) for the motor vehicle (100) as claimed in claim 1, wherein said shift drum assembly (240) comprises a star-index member (250) disposed at a lateral end thereof, said star-index member (250) being configured to engage with a gearshift pawl (255) connected to said gearshift shaft (245), and a long axis (P-P') of said gearshift pawl (255) being disposed in one of a forward or a rearward inclination when viewed from a lateral side (RH, LH) of said internal combustion engine (101).

10. The internal combustion engine (101) for the motor vehicle (100) as claimed in claim 1, wherein said crankcase assembly (201) comprises a peripheral wall (302), said peripheral wall (302) disposed substantially orthogonal to an outer lateral surface (301) of said crankcase assembly (201), said peripheral wall (302) comprises a lower wall portion comprising a first portion (303) and a second portion (304), said second portion (304) disposed at an acute angle with respect to said first portion (303) and rearward to said first portion (303), said gearshift shaft (245) being disposed in proximity to a transition portion between said first portion (303) and said second portion (304).

11. The internal combustion engine (101) for the motor vehicle (100) as claimed in claim 1, wherein said crankcase assembly (201) comprises an integrated member (310), said integrated member (310) comprises a stopper portion (316) and a reinforcing portion (317), said stopper portion (316) comprises a cross-sectional area substantially larger than a cross-sectional area of said reinforcing portion (317), said stopper portion (316) is disposed on an outer lateral surface (301) of said crankcase assembly (201) and said reinforcing portion (317) being disposed on said stopper portion (317).

12. The internal combustion engine (101) for the motor vehicle (100) as claimed in claim 1, wherein said drum stopper (260) and a gearshift pawl (255) being disposed one side to an imaginary line (309) passing through an upper most portion of a star-index member (250) of said shift drum assembly (240), and said imaginary line (309) disposed orthogonal to a first vertical plane (P1) passing through an axis of said drum stopper (260).

13. The internal combustion engine (101) for the motor vehicle (100) as claimed in claim 1, wherein said internal combustion engine (101) comprises a mid-plane (MP) disposed orthogonal to an axis of the gearshift shaft (245), said clutch shaft (220), a drive shaft (235), a kick-start shaft (265), a shift drum assembly (240), a drum stopper (260), and a major portion of a clutch assembly (215) and said gearshift pawl (255) being disposed on one side of said mid-plane (MP), and wherein said mid-plane (MP) passing through said gearshift shaft (245) and disposed orthogonal to an axis of said gearshift shaft (245).

14. The internal combustion engine (101) for the motor vehicle (100) as claimed in claim 13, wherein said mid-plane (MP) being configured to provide a mass distribution on either side of said mid-plane (MP) to be within a range of 45 to 55 % of a total mass of said internal combustion engine (101).

## Patentansprüche

1. Motorrad (100) mit einem Verbrennungsmotor (101) und einer Getriebeeinheit (101), wobei der Verbrennungsmotor (101) und die Getriebeeinheit (101) aufweisen:
eine Kurbelwelle (205), wobei die Kurbelwelle (205) von einer Kurbelgehäuseanordnung (201) in einer Querrichtung des Motorrads (100) gelagert ist;
eine Kupplungswelle (220), die zumindest eine Kupplung (221) trägt, wobei die zumindest eine Kupplung (221) dazu eingerichtet ist, die Kupplungswelle (220) mit der Kurbelwelle (205) zu kuppeln und entkuppeln;
**dadurch gekennzeichnet, dass** die Getriebeeinheit (101) ferner aufweist:
eine Schalttrommelbaugruppe (240), die im Wesentlichen unterhalb der Kupplungswelle (220) angeordnet ist;
einen Trommelstopper (260), dazu eingerichtet, mit der Schalttrommelbaugruppe (240) zu koppeln, und angeordnet im Wesentlichen hinter der Schalttrommelbaugruppe (240), wenn von einer Lateralseite (RH, LH) des Verbrennungsmotors (101) und des Motorrads (100) aus betrachtet; und
eine Gangschaltwelle (245), angeordnet vor der Schalttrommelbaugruppe (240), wenn von einer Lateralseite (RH, LH) des Verbrennungsmotors (101) und des Motorrads (100) aus betrachtet.

2. Verbrennungsmotor (101) für das Kraftfahrzeug (100) nach Anspruch 1, wobei der Verbrennungsmotor (101) eine Kickstartwelle (265) aufweist, wobei der Trommelstopper (260) im Wesentlichen zwischen der Kickstartwelle (265) und der Schalttrommelbaugruppe (240) angeordnet ist.

3. Verbrennungsmotor (101) für das Kraftfahrzeug (100) nach Anspruch 1, wobei die Kurbelgehäuseanordnung (201) ein integriertes Element (310) aufweist, welches integrierte Element (310) im Wesentlichen zwischen einer ersten vertikalen Ebene (P1), die durch eine Achse des Trommelstoppers (260) verläuft, und einer zweiten vertikalen Ebene (P2), die durch eine Achse einer Kickstartwelle (265) verläuft, angeordnet ist.

4. Verbrennungsmotor (101) für das Kraftfahrzeug (100) nach Anspruch 3, wobei die erste vertikale Ebene (P1) und die zweite vertikale Ebene (P2) in einem ersten Abstand zueinander angeordnet sind, der wesentlich kleiner ist als die Länge des Trommelstoppers (260), und wobei eine dritte vertikale Ebene (P3), die durch eine Achse der Schalttrommelbaugruppe (240) verläuft, in einem zweiten Abstand von der ersten vertikalen Ebene (P1) angeordnet ist,
wobei der zweite Abstand wesentlich kleiner ist als die Länge des Trommelstoppers (260).

5. Verbrennungsmotor (101) für das Kraftfahrzeug (100) nach Anspruch 3, wobei der Trommelstopper (260) mit einem gegen das integrierte Element (310) vorgespannten elastischen Element (380) versehen ist und die Kickstartwelle (265) mit einem Kickwellenstopper (305) versehen ist, der dazu eingerichtet ist, bei einem vorbestimmten Drehwinkel der Kickstartwelle (265) dem integrierten Element (310) anzuliegen.

6. Verbrennungsmotor (101) für das Kraftfahrzeug (100) nach Anspruch 3, wobei das integrierte Element (310) einstückig mit der Kurbelgehäuseanordnung (201) ausgebildet ist und das integrierte Element (310) eine Basis (311) mit einer größeren Querschnittsfläche aufweist, die an eine Außenwand (302) der Kurbelgehäuseanordnung (201) anstößt, und wobei das integrierte Element (310) eine geometrische Form aufweist, die von einer Seitenansicht (RH, LH) der Kurbelgehäuseanordnung (201) aus gesehen ein dreieckiges Profil umfasst.

7. Verbrennungsmotor (101) für das Kraftfahrzeug (100) nach Anspruch 2, wobei der Verbrennungsmotor (101) einen dreieckigen Bereich (TR) mit an den Achsen der Kickstarterwelle (265), der Kupplungswelle (220) und der Schaltwelle (245) gebildeten Eckpunkten aufweist, wobei zumindest einer der Trommelstopper (260) und die Schalttrommelbaugruppe (240) im Wesentlichen innerhalb des dreieckigen Bereichs (TR) angeordnet sind, wenn von der Seite des Verbrennungsmotors (101) aus betrachtet.

8. Verbrennungsmotor (101) für das Kraftfahrzeug (100) nach Anspruch 1, wobei die Kurbelgehäuseanordnung (201) ein im Wesentlichen gleichseitiges viereckiges Profil aufweist, wenn von einer projizierten Seitenansicht des Verbrennungsmotors (101) betrachtet.

9. Verbrennungsmotor (101) für das Kraftfahrzeug (100) nach Anspruch 1, wobei die Schalttrommelbaugruppe (240) ein an ihrem seitlichen Ende angeordnetes Sternindexelement (250) aufweist, wobei das Sternindexelement (250) dazu eingerichtet ist, mit einer mit der Schaltwelle (245) verbundenen Schaltklinke (255) in Eingriff zu gelangen, und eine Längsachse (P-P') der Schaltklinke (255) in einer Vorwärts- oder einer Rückwärtsneigung angeordnet ist, wenn von einer Lateralseite (RH, LH) des Verbrennungsmotors (101) aus betrachtet.

10. Verbrennungsmotor (101) für das Kraftfahrzeug (100) nach Anspruch 1, wobei die Kurbelgehäuseanordnung (201) eine Außenwand (302) aufweist, wobei die Außenwand (302) im Wesentlichen orthogonal zu einer äußeren Seitenfläche (301) der Kurbelgehäuseanordnung (201) angeordnet ist, wobei die Außenwand (302) einen unteren Wandabschnitt mit einem ersten Abschnitt (303) und einem zweiten Abschnitt (304) aufweist, wobei der zweite Abschnitt (304) in einem spitzen Winkel zu dem ersten Abschnitt (303) und hinter dem ersten Abschnitt (303) angeordnet ist, wobei die Schaltwelle (245) nächst einem Übergangsabschnitt zwischen dem ersten Abschnitt (303) und dem zweiten Abschnitt (304) angeordnet ist.

11. Verbrennungsmotor (101) für das Kraftfahrzeug (100) nach Anspruch 1, wobei die Kurbelgehäuseanordnung (201) ein integriertes Element (310) aufweist, wobei das integrierte Element (310) einen Stopperteil (316) und einen Verstärkungsteil (317) aufweist, wobei der Stopperteil (316) eine Querschnittsfläche wesentlich größer als die Querschnittsfläche des Verstärkungsteils (317) aufweist, wobei der Stopperteil (316) auf einer äußeren Seitenfläche (301) der Kurbelgehäuseanordnung (201) angeordnet ist und das Verstärkungsteil (317) auf dem Stopperteil (317) angeordnet ist.

12. Verbrennungsmotor (101) für das Kraftfahrzeug (100) nach Anspruch 1, wobei der Trommelstopper (260) und eine Schaltklinke (255) seitlich zu einer gedachten Linie (309), die durch einen obersten Teilbereich eines Sternindexelements (250) der Schalttrommelbaugruppe (240) verläuft, angeordnet sind, und die gedachte Linie (309) orthogonal zu einer durch eine Achse des Trommelstoppers (260) verlaufenden ersten vertikalen Ebene (P1) liegt.

13. Verbrennungsmotor (101) für das Kraftfahrzeug (100) nach Anspruch 1, wobei der Verbrennungsmotor (101) eine Mittelebene (MP) orthogonal zu einer Achse der Schaltwelle (245) aufweist, die Kupplungswelle (220), eine Antriebswelle (235), eine Kickstartwelle (265), eine Schalttrommelbaugruppe (240), ein Trommelstopper (260) und ein Hauptteil einer Kupplungsbaugruppe (215) und die Schaltklinke (255) seitlich zu der Mittelebene (MP) angeordnet sind, und wobei die Mittelebene (MP) durch die Schaltwelle (245) verläuft und orthogonal zu einer Achse der Schaltwelle (245) liegt.

14. Verbrennungsmotor (101) für das Kraftfahrzeug (100) nach Anspruch 13, wobei die Mittelebene (MP) so eingerichtet ist, eine Massenverteilung auf beiden Seiten der Mittelebene (MP) in einem Bereich von 45 bis 55 % der Gesamtmasse des Verbrennungsmotors (101) zu schaffen.

## Revendications

1. Motocyclette (100) équipée d'un moteur à combustion interne (101) et d'un ensemble boîte de vitesses (101), ledit moteur à combustion interne (101) et ledit ensemble boîte de vitesses (101) comprenant :
un vilebrequin (205), ledit vilebrequin (205) étant supporté par un ensemble de carter (201) dans une direction transversale de la motocyclette (100) ;
un arbre d'embrayage (220), supportant au moins un embrayage (221), ledit au moins un embrayage (221) étant configuré pour engager et désengager ledit arbre d'embrayage (220) avec ledit vilebrequin (205) ;
**caractérisé en ce que** l'ensemble de boîte de vitesses (101) comprend en outre :
un ensemble de tambour de changement de vitesse (240), disposé sensiblement vers le bas dudit arbre d'embrayage (220) ;
un dispositif d'arrêt de tambour (260), configuré pour s'engager avec ledit ensemble de tambour de changement de vitesse (240) et disposé sensiblement en arrière dudit ensemble de tambour de changement de vitesse (240) en vue depuis un côté latéral (RH, LH) dudit moteur à combustion interne (101) et de la motocyclette (100) ; et
un arbre de changement de vitesse (245), disposé à l'avant dudit ensemble de tambour de changement de vitesse (240) en vue depuis un côté latéral (RH, LH) dudit moteur à combustion interne (101) et de la motocyclette (100).

2. Moteur à combustion interne (101) pour véhicule à moteur (100) selon la revendication 1, dans lequel ledit moteur à combustion interne (101) comprend un arbre de démarrage au pied (265), ledit dispositif d'arrêt de tambour (260) étant disposé sensiblement entre ledit arbre de démarrage au pied (265) et ledit ensemble de tambour de changement de vitesse (240).

3. Moteur à combustion interne (101) pour le véhicule à moteur (100) selon la revendication 1, dans lequel ledit ensemble de carter (201) comprend un élément intégré (310), ledit élément intégré (310) étant disposé sensiblement entre un premier plan vertical (P1) passant par un axe dudit dispositif d'arrêt de tambour (260) et un second plan vertical (P2) passant par un axe d'un arbre de démarrage au pied (265).

4. Moteur à combustion interne (101) pour véhicule à moteur (100) selon la revendication 3, dans lequel ledit premier plan vertical (P1) et ledit deuxième plan vertical (P2) sont disposés à une première distance sensiblement inférieure à une longueur dudit dispositif d'arrêt de tambour (260), et dans lequel un troisième plan vertical (P3), qui passe par un axe dudit ensemble de tambour de changement de vitesse (240), est disposé à une deuxième distance dudit premier plan vertical (P1), ladite deuxième distance étant sensiblement inférieure à ladite longueur dudit dispositif d'arrêt de tambour (260).

5. Moteur à combustion interne (101) pour véhicule à moteur (100) selon la revendication 3, dans lequel ledit dispositif d'arrêt de tambour (260) est muni d'un élément élastique (380) préchargé contre ledit élément intégré (310) et ledit arbre de démarrage au pied (265) est muni d'un butoir d'arbre de démarrage au pied (305) configuré pour venir en butée contre ledit élément intégré (310) à un angle de rotation prédéterminé dudit arbre de démarrage au pied (265).

6. Moteur à combustion interne (101) pour véhicule automobile (100) selon la revendication 3, dans lequel ledit élément intégré (310) est formé d'un seul tenant avec ledit ensemble de carter (201) et ledit élément intégré (310) comprend une base (311) avec une section transversale plus grande venant en butée contre une paroi périphérique (302) dudit ensemble de carter (201), et dans lequel ledit élément intégré (310) comprend une forme géométrique incluant un profil triangulaire en vue depuis un côté latéral (RH, LH) dudit ensemble de carter (201).

7. Moteur à combustion interne (101) pour véhicule à moteur (100) selon la revendication 2, dans lequel ledit moteur à combustion interne (101) comprend une région triangulaire (TR) avec des sommets formés au niveau des axes dudit arbre de démarrage au pied (265), dudit arbre d'embrayage (220) et ledit arbre de changement de vitesse (245), au moins l'un dudit dispositif d'arrêt de tambour (260) et dudit ensemble de tambour de changement de vitesse (240) étant disposé sensiblement à l'intérieur de ladite région triangulaire (TR) en vue depuis le côté dudit moteur à combustion interne (101).

8. Moteur à combustion interne (101) pour véhicule à moteur (100) selon la revendication 1, dans lequel ledit ensemble de carter (201) comprend un profil sensiblement équilatéral quadrilatéral vu d'une vue latérale projetée dudit moteur à combustion interne (101).

9. Moteur à combustion interne (101) pour véhicule à moteur (100) selon la revendication 1, dans lequel ledit ensemble de tambour de changement de vitesse (240) comprend un élément indice en étoile (250) disposé à une extrémité latérale de celui-ci, ledit élément indice en étoile (250) étant configuré pour s'engager avec un cliquet de changement de vitesse (255) relié audit arbre de changement de vitesse (245), et un axe longitudinal (P-P') dudit cliquet de changement de vitesse (255) étant disposé dans une inclinaison vers l'avant ou vers l'arrière en vue depuis un côté latéral (RH, LH) dudit moteur à combustion interne (101).

10. Moteur à combustion interne (101) pour véhicule automobile (100) selon la revendication 1, dans lequel ledit ensemble de carter (201) comprend une paroi périphérique (302), ladite paroi périphérique (302) étant disposée sensiblement orthogonalement à une surface latérale extérieure (301) dudit ensemble de carter (201), ladite paroi périphérique (302) comportant une partie de paroi inférieure comprenant une première partie (303) et une deuxième partie (304), ladite deuxième partie (304) étant disposée à un angle aigu par rapport à ladite première partie (303) et en arrière de ladite première partie (303), ledit arbre de changement de vitesse (245) étant disposé à proximité d'une partie de transition entre ladite première partie (303) et ladite deuxième partie (304).

11. Moteur à combustion interne (101) pour le véhicule à moteur (100) selon la revendication 1, dans lequel ledit ensemble de carter (201) comprend un élément intégré (310), ledit élément intégré (310) comprend une partie d'arrêt (316) et une partie de renfort (317), ladite partie d'arrêt (316) comportant une section transversale sensiblement plus grande que la section transversale de ladite partie de renfort (317), ladite partie d'arrêt (316) étant disposée sur une surface latérale extérieure (301) dudit ensemble de carter (201) et ladite partie de renfort (317) étant disposée sur ladite partie d'arrêt (317).

12. Moteur à combustion interne (101) pour véhicule à moteur (100) selon la revendication 1, dans lequel ledit dispositif d'arrêt de tambour (260) et un cliquet de changement de vitesse (255) sont disposés d'un côté d'une ligne imaginaire (309) passant par une partie supérieure d'un élément d'indexation en étoile (250) dudit ensemble de tambour de changement de vitesse (240), et ladite ligne imaginaire (309) étant disposée orthogonalement à un premier plan vertical (P1) passant par un axe dudit dispositif d'arrêt à tambour (260).

13. Moteur à combustion interne (101) pour véhicule automobile (100) selon la revendication 1, dans lequel ledit moteur à combustion interne (101) comprend un plan médian (MP) disposé orthogonalement à un axe de l'arbre de changement de vitesse (245), ledit arbre d'embrayage (220), un arbre d'entraînement (235), un arbre de démarrage au pied (265), un ensemble de tambour de changement de vitesse (240), un dispositif d'arrêt de tambour (260), et une partie principale d'un ensemble d'embrayage (215) et ledit cliquet de changement de vitesse (255) étant disposés d'un côté dudit plan médian (MP), et ledit plan médian (MP) passant à travers ledit arbre de changement de vitesse (245) et étant disposé orthogonalement à un axe dudit arbre de changement de vitesse (245).

14. Moteur à combustion interne (101) pour véhicule à moteur (100) selon la revendication 13, dans lequel ledit plan médian (MP) est configuré pour fournir une répartition de masse de chaque côté dudit plan médian (MP) comprise dans une plage de 45 à 55 % de la masse totale dudit moteur à combustion interne (101).
